# FASCICULE DE BREVET EUROPEEN

(11) **EP 0 695 859 B1**
(45) Date de publication et mention de la délivrance du brevet: **26.05.1999**
(21) Numéro de dépôt: 94810453.4
(22) Date de dépôt: 03.08.1994
(51) Int. Cl.: F02B 51/02, F16J 15/12

(54) **Dispositif catalyseur de combustion pour moteur à combustion interne**
Katalysevorrichtung für eine Brennkraftmaschine
Catalytic device for an internal combustion engine

(43) Date de publication de la demande: 07.02.1996
(73) Titulaire: FINANCIERE C. VERNES SA, CH-1206 Genève (CH)
(72) Inventeur: Noetzlin, Bernard, CH-1224 Chene-Bougeries (CH)
(74) Mandataire: Thébault, Jean-Louis

(56) Documents cités:
- DE-A- 3 331 579
- DE-C- 4 122 122
- FR-A- 1 066 721
- US-A- 1 703 202

## Description

La présente invention concerne un dispositif catalyseur de combustion pour moteur à combustion interne.

On connaît les problèmes actuels de pollution générée par les moteurs à combustion interne, qu'ils utilisent des carburants du type essence, gazole, gaz de pétrole liquéfié ou gaz naturel comprimé.

Les émissions sont de plusieurs ordres et notamment des hydrocarbures imbrûlés, des oxydes de carbone, des oxydes d'azote et des particules.

Des systèmes existent déjà qui permettent de réduire certaines émissions.

C'est le cas des systèmes d'injection associés à un pilotage électronique qui autorisent des fonctionnements en bouclage.

Ainsi une sonde placée dans l'échappement permet d'analyser les gaz et de commander les dosages à l'admission, ceci en association avec un pot catalytique et de façon à le faire travailler par oxydation ou réduction avec la meilleure efficacité.

Il se trouve que les catalyseurs conventionnels ne peuvent s'amorcer, tout comme les sondes à oxygène, que si les températures des gaz d'échappement et de la structure catalytique sont suffisamment élevées.

Des systèmes de chauffage ont été développés pour être disposés juste en amont des catalyseurs, mais de tels systèmes restent complexes et coûteux.

Les émissions d'hydrocarbures imbrûlés résultent essentiellement de quatre paramètres :
- la qualité de combustion elle-même,
- le piégeage des hydrocarbures dans les volumes morts de la chambre de combustion; très difficiles d'accès à la flamme,
- les phénomènes d'absorption/désorption des hydrocarbures dans les films d'huile, et
- les dépôts susceptibles de constituer des sources importantes de rétention des hydrocarbures.

Il se trouve que le piégeage des hydrocarbures dans les volumes morts difficilement accessibles à la flamme constituent la source majeure des imbrûlés pouvant aller jusqu'à 70 % des hydrocarbures totaux évacués.

Ces volumes morts sont situés entre le premier cordon et le cylindre et dans les anneaux de feu.

Les micro-volumes critiques au voisinage des sièges et des soupapes font aussi partie des volumes morts.

Dans le cas des moteurs diesel il se forme des quantités importantes de particules imbrûlées.

Si ces particules sont dans des zones chaudes, elles vont brûler en présence d'oxygène.

Celles qui n'ont pas pu brûler se retrouvent dans les conduits d'échappement, en aval des chambres de combustion.

Dans le cas du gaz naturel, les émissions sont essentiellement composées de méthane même avec des pots à catalyseur.

En effet, les atomes de la molécule de méthane ont des forces de liaison très importantes et la vitesse de combustion est lente, ce qui explique ces hauts niveaux d'émission.

Le but de l'invention est de traiter les gaz de combustion, de façon catalytique, directement dans la chambre de combustion.

Le but est également d'apporter une solution qui fonctionne à froid, dès les premiers tours de moteur, qui reste peu onéreuse, qui puisse être adaptée à tous les types de moteur à combustion interne.

De plus la solution proposée par l'invention doit permettre une adaptation quel que soit le type de joint de culasse utilisé, y compris les joints multifeuilles, avec ou sans sertissure.

A cet effet, le dispositif catalyseur de combustion pour moteur à combustion interne, du type comprenant un bloc moteur et une culasse, éléments entre lesquels est serré un joint de culasse y compris les joints multifeuilles, avec ou sans sertissure, vus des cylindres dans chacun desquels est disposé un piston mobile qui détermine une chambre de combustion, se caractérise en ce qu'un catalyseur est déposé sur un support périphérique et de saillie limitée dans la chambre de combustion, au droit du chant du joint de culasse, ledit support et son catalyseur n'ayant aucune fonction d'agitation du mélange combustible.

Selon un mode de réalisation particulier, le support de catalyseur est la sertissure ou l'anneau de feu du joint de culasse lui-même. Le support peut être un élément rapporté sur la sertissure ou intégré à celle-ci.

Dans certains cas, cet élément rapporté vient en saillie dans la chambre de combustion et il est éloigné de la sertissure au droit du chant du joint de culasse de façon à ménager un volume libre formant bouclier thermique entre cette sertissure et cet élément.

Selon un mode de réalisation particulier concernant un joint de culasse multifeuilles, exempt de sertissure, le support de catalyseur est un appendice formé par la mise en saillie dans la chambre de combustion d'une partie d'au moins l'une des feuilles de ce joint.

Selon une variante de ce mode de réalisation particulier, l'une des feuilles au moins est déformée pour former un bouclier sur la face extérieure duquel est déposé le catalyseur.

Selon un perfectionnement de l'invention, le dispositif comprend des moyens de chauffage disposés à proximité immédiate du support de catalyseur.

Ces moyens de chauffage sont isolés de la chambre de combustion par le support de catalyseur.

Selon un mode de réalisation particulier les éléments de chauffage comprennent une résistance électrique.

Le support et/ou les moyens de chauffage sont disposés éventuellement sur un ou plusieurs secteurs sur la périphérie du chant du joint de culasse.

L'invention est décrite ci-après selon un mode de réalisation particulier de l'invention, non limitatif, en regard des figures annexées qui représentent :
- la figure 1, une vue en coupe schématique d'un cylindre avec un support de catalyseur rapporté,
- la figure 1A, une vue en coupe schématique d'un cylindre avec un support de catalyseur constitué par la sertissure elle-même,
- la figure 2, une vue en coupe d'une variante de support selon l'invention,
- la figure 3, une vue en coupe d'une autre variante avec support en saillie dans la chambre de combustion,
- la figure 4, une vue en coupe d'une variante de forme de la sertissure elle-même,
- les figures 5 et 5A, des variantes avec un volume mort formant bouclier thermique, disposé respectivement en partie haute et en partie basse,
- les figures 6 et 7, des variantes avec des moyens de chauffage,
- les figures 8, 9, 10 et 11, des variantes de réalisation dans le cas des joints multifeuilles
- les figures 12A et 12B, des schémas des résistances complètes et à secteurs, et

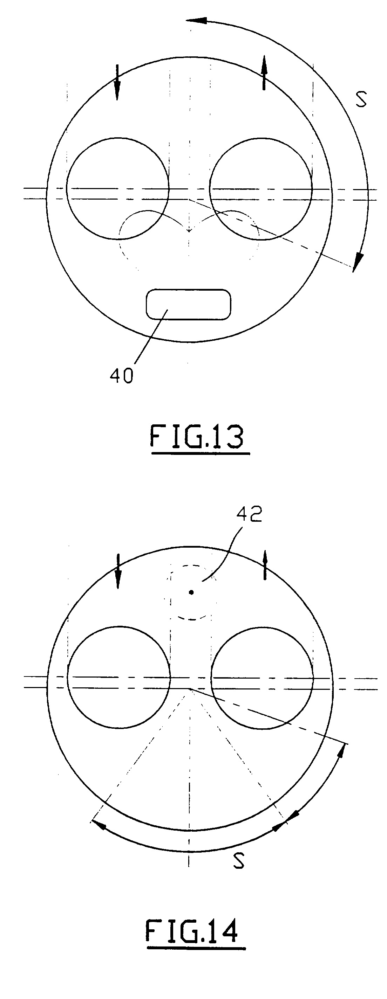

- les figures 12 et 13, des représentations schématiques des positionnements des résistances et des dépôts de catalyseur.

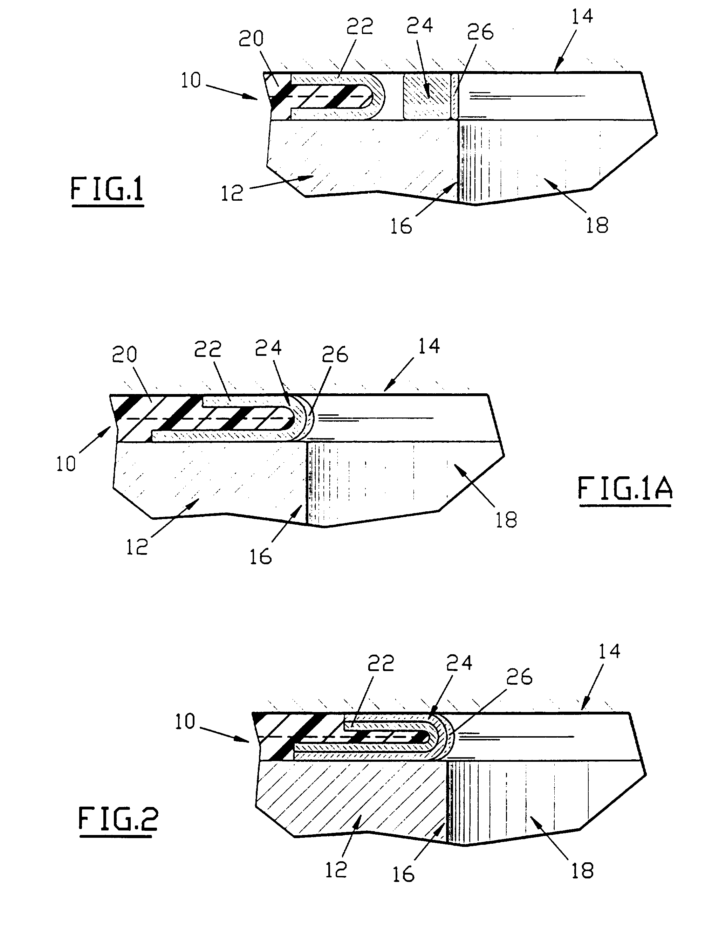

Sur la figure 1, on a représenté une vue schématique d'un joint de culasse 10, monté entre un bloc moteur 12 et une culasse 14.

Sur cette figure on a fait apparaître une partie du cylindre 16, dans lequel un piston, non dessiné par souci de simplification, détermine un volume variable dénommé chambre de combustion 18.

Le joint de culasse 10, de façon connue, comprend une partie matrice 20 et une partie sertissure 22 métallique, qui vient à proximité du bord de la chambre de combustion, à la périphérie de la chambre de combustion.

Pour la suite de la description, on référence 24 le support de catalyseur.

Sur la figure 1, le support 24 de catalyseur est une pièce rapportée du type annulaire, disposée concentriquement à la sertissure avec sur la face en contact avec la chambre de combustion une couche de catalyseur 26.

Dans le mode de réalisation de la figure 1A, ce support de catalyseur est la face extérieure de la sertissure 22 du joint de culasse, c'est à dire la face mise en contact avec la chambre de combustion 18.

Le catalyseur 26 est déposé sur le support par tout moyen adapté et dans ce cas il s'agit d'un dépôt par projection ou par trempé.

La structure catalytique comprend généralement une matrice poreuse en céramique ou en acier associée avec des métaux nobles.

Ainsi dans l'exemple représenté, le support est métallique revêtu d'une couche "rendue" poreuse qui est, à son tour, revêtue de métaux ou matériaux à effet catalytique tels que le platine, le palladium, le rhodium.

Sur les figures 2, 3 et 4, le support de catalyseur est modifié dans sa forme.

Sur la figure 2, le support 24 a un profil identique à celui de la sertissure et il est superposé sur la face extérieure de celle-ci, à la façon d'une double sertissure.

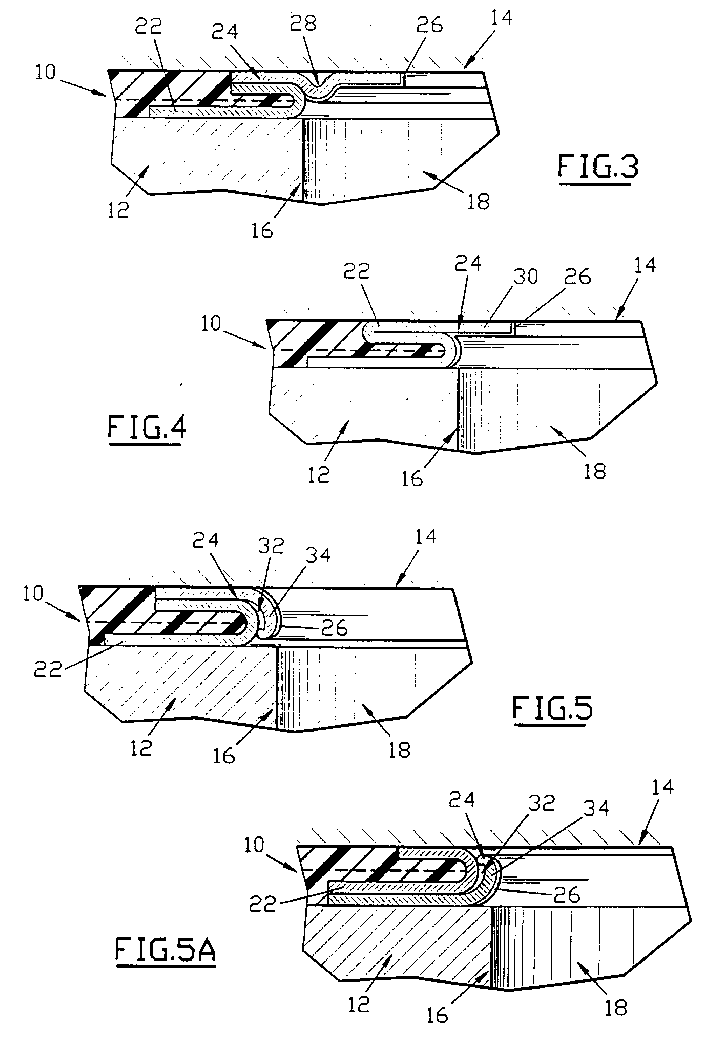

La variante de la figure 3 montre un support bloqué également entre la sertissure et la culasse mais il se prolonge vers l'intérieur de la chambre de combustion.

La surface développée, au contact des gaz contenus dans la chambre de combustion, est très importante.

Une déformation 28, ménagée au droit du chant du joint de culasse, du type emboutissage, confère à la partie en saillie dans la chambre de combustion de ce support, un effet élastique qui tend à la plaquer contre la culasse 14 et surtout cette déformaton permet un centrage efficace de ce support par rapport à la sertissure.

Le catalyseur est déposé comme dans les modes de réalisation précédents sur la face en regard de la chambre de combustion.

Sur la figure 4, la sertissure possède elle-même un profil particulier de façon qu'une aile 30 vienne en saillie dans la chambre de combustion, cette aile étant obtenue par pliage en S de la sertissure.

Cette aile est également plaquée sur la culasse de façon à limiter les perturbations dans la chambre de combustion et interdire tout contact avec les pièces mobiles dans le cylindre.

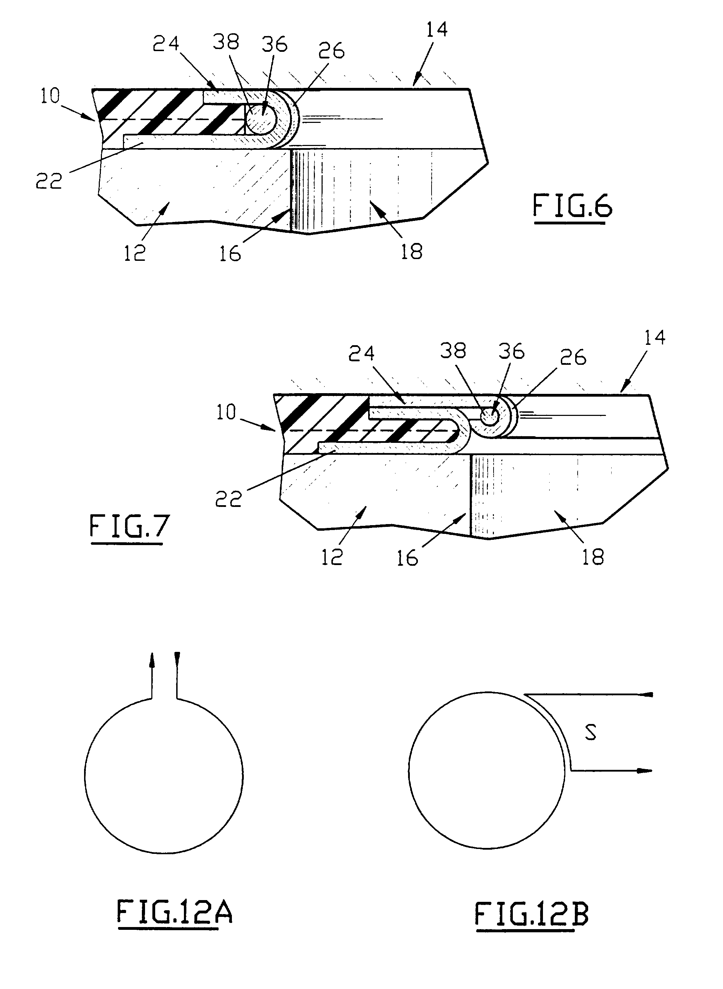

Le support de catalyseur des figures 5 et 5A présentent une particularité en ce sens que le support est écarté de la sertissure au droit du chant de cette sertissure.

Il est ainsi ménagé un volume libre formant un bouclier thermique 32.

Le support comprend une aile 34 rabattue autour de la sertissure du joint de culasse.

Dans la variante de la figure 5, l'aile est bloquée par son talon entre le joint et la culasse et l'aile est rabattue vers le bas, tandis que dans la variante de la figure 5A, le talon est bloqué entre le bloc moteur et le joint de culasse, l'aile 34 étant rabattue vers le haut.

Sur la figure 6, on a représenté une variante de réalisation avec un support 24 et des moyens de chauffage 36 de ce support.

Ces moyens de chauffage comprennent une résistance électrique 38 montée sous la sertissure 22, ce qui isole cette résistance de la chambre de combustion.

La sertissure constitue le support de catalyseur comme dans la variante de la figure 1.

Sur la figure 7, la résistance est disposée dans un support 24 de catalyseur indépendant de la sertissure.

Dans ce cas, le support fait saillie à l'intérieur de la chambre de combustion.

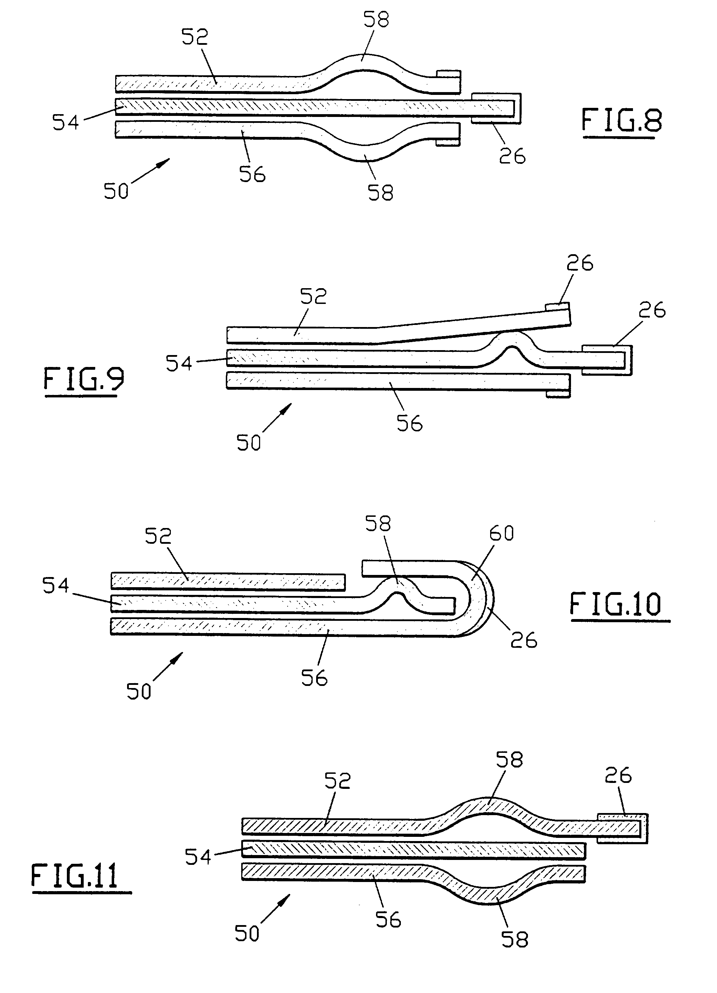

Sur la figure 8, on a représenté un joint multifeuilles 50, uniquement métallique ou composite métal-élastomère.

Ce joint comprend de façon connue plusieurs feuilles superposées, en l'occurrence trois feuilles 52, 53 et 54, respectivement disposées à la partie supérieure, en partie médiane et en partie inférieure.

Dans le mode de réalisation représenté sur la figure 8, la feuille médiane 54, se prolonge par un appendice 56, venu de la feuille elle-même, en saillie dans la chambre de combustion, cet appendice formant le support de catalyseur proprement dit.

On peut également disposer du catalyseur de façon complémentaire sur les faces supérieure et inférieure des feuilles supérieure et inférieure, pour la partie qui est dans la chambre de combustion.

On remarque que le bossage 58 des feuilles permettant au joint d'assurer l'étanchéité, est porté par les feuilles supérieure et inférieure.

Sur la représentation de la figure 9, la seule différence consiste à ménager le bossage d'étanchéité sur la seule feuille médiane, les feuilles supérieure et inférieure étant l'une pliée pour tenir compte du bossage et l'autre plane.

La variante de la figure 10 prévoit une feuille inférieure pliée, tel un bouclier 60, autour de la feuille médiane de façon à venir abouter la feuille supérieure, prévue en retrait de cette feuille médiane.

Le bossage est porté par la seule feuille médiane et le catalyseur 26 est porté par la face extérieure du bouclier.

Pour la variante de la figure 11, on constate que la catalyseur 26 est porté par la feuille supérieure qui est en saillie par rapport aux autres feuilles.

Une telle variante permet de placer la feuille portant le catalyseur à proximité immédiate de la partie haute de la chambre de combustion, sans gêner le déplacement du piston, variante présentant un intérêt réel pour certaines applications.

Sur la figure 12A la résistance est représentée de façon schématique.

Sur la figure 128, la résistance n'est prévue que sur un secteur S de la périphérie de la chambre de combustion.

Dans le cas des moteurs diesel à préchambre, voir figure 13, il existe une préchambre de combustion 40 et le traitement catalytique des gaz présente un intérêt dans le voisinage de la soupape d'échappement.

Dans le cas des moteurs diesel à préchambre, le secteur S chauffé est limité.

La figure 14 concerne les moteurs à allumage commandé et montre le chauffage du secteur S opposé à la bougie 42.

Ce chauffage électrique local peut être piloté électroniquement par le calculateur du moteur mais aussi par un boîtier électronique spécifique.

Cet apport de calories présente un intérêt particulier dans les pays froids, lors des démarrages ou durant certaines plages de fonctionnement, à faible charge par exemple.

L'énergie à fournir est au maximum de quelques centaines de watts.

En effet, cette quantité est adaptée en fonction de la chaleur spécifique du matériau, de la masse chauffée, de l'activité et de la quantité de matériaux nobles catalytiques et de l'écart de température souhaité.

Les éléments catalytiques ainsi localisés dans la chambre de combustion peuvent être déposés par des moyens plus sophistiqués comme le dépôt sous vide, ce qui permet de bien imprégner les surfaces à traiter et d'améliorer les accrochages.

Ces éléments catalytiques sont déposés sur des couches primaires métalliques ou céramiques présentant, après traitement, de grandes surfaces d'imprégnation.

On peut envisager comme support, tout élément rapporté ou tout élément délimitant la chambre de combustion ou une combinaison des deux.

## Revendications

1. Dispositif catalyseur de combustion pour moteur à combustion interne, du type comprenant un bloc moteur (12) et une culasse (14), éléments entre lesquels est serré un joint de culasse (10), y compris les joints multifeuilles, avec ou sans sertissure, ainsi que des cylindres dans chacun desquels est disposé un piston mobile qui détermine une chambre de combustion (18), caractérisé en ce qu'il comprend un catalyseur déposé sur un support (24) périphérique et de saillie limitée dans la chambre de combustion, au droit du chant du joint de culasse, ledit support et son catalyseur n'ayant aucune fonction d'agitation du mélange combustible.

2. Dispositif catalyseur de combustion selon la revendication 1, caractérisé en ce que le support (24) de catalyseur est la sertissure (22) du joint de culasse (10).

3. Dispositif catalyseur de combustion selon l'une des revendications 1 ou 2, caractérisé en ce que le support (24) est un élément rapporté sur la sertissure (22), ou intégré à cette sertissure.

4. Dispositif catalyseur de combustion selon la revendication 3, caractérisé en ce que le support (24) rapporté vient en saillie dans la chambre de combustion (18).

5. Dispositif catalyseur de combustion selon la revendication 3 ou 4, caractérisé en ce que le support (24) rapporté est éloigné de la sertissure au droit du chant du joint de culasse (10) de façon à ménager un volume libre formant un bouclier thermique (32).

6. Dispositif catalyseur de combustion selon la revendication 1, caractérisé en ce que, dans le cas d'un joint de culasse multifeuilles, exempt de sertissure, le support de catalyseur est un appendice formé par la mise en saillie dans la chambre de combustion d'une partie d'au moins l'une des feuilles de ce joint.

7. Dispositif catalyseur de combustion selon la revendication 6, caractérisé en ce que l'une des feuilles au moins est déformée pour former un bouclier sur la face extérieure duquel est déposé le catalyseur.

8. Dispositif catalyseur de combustion selon l'une quelconque des revendications précédentes, caractérisé en ce qu'il comprend des moyens de chauffage (36) disposés à proximité immédiate du support (24) de catalyseur.

9. Dispositif catalyseur de combustion selon l'une quelconque des revendications précédentes, caractérisé en ce que les moyens de chauffage (36) sont isolés de la chambre de combustion (18) par le support (24) de catalyseur.

10. Dispositif catalyseur de combustion selon la revendication 8 ou 9, caractérisé en ce que les moyens de chauffage comprennent une résistance électrique (38).

11. Dispositif catalyseur de combustion selon la revendication 8,9 ou 10, caractérisé en ce que le support et/ou les moyens de chauffage sont disposés sur un ou plusieurs secteurs S sur la périphérie du chant du joint de culasse.

## Patentansprüche

1. Katalysevorrichtung für eine Brennkraftmaschine des Typs mit einem Motorblock (12) und einem Zylinderkopf (14), Teile, zwischen welchen eine Zylinderkopfdichtung (10), wobei die mehrlagigen Dichtungen eingeschlossen sind, mit oder ohne Fassung eingeklemmt ist, sowie mit Zylindern, wobei in jedem hiervon ein beweglicher Kolben angeordnet ist, der einen Brennraum (18) bestimmt, dadurch gekennzeichnet, daß sie entlang der Kante der Zylinderkopfdichtung einen auf einem umfänglichen und begrenzt in den Brennraum ragenden Träger (24) aufgetragenen Katalysator umfaßt, wobei der Träger und sein Katalysator keine Funktion zum Bewegen des brennbaren Gemischs haben.

2. Katalysevorrichtung nach Anspruch 1, dadurch gekennzeichnet, daß der Träger (24) des Katalysators die Fassung (22) der Zylinderkopfdichtung (10) ist.

3. Katalysevorrichtung nach Anspruch 1 oder 2, dadurch gekennzeichnet, daß der Träger (24) ein auf die Fassung (22) aufgesetztes oder in diese Fassung integriertes Teil ist.

4. Katalysevorrichtung nach Anspruch 3, dadurch gekennzeichnet, daß der aufgesetzte Träger (24) in den Brennraum (18) vorsteht.

5. Katalysevorrichtung nach Anspruch 3 oder 4, dadurch gekennzeichnet, daß der aufgesetzte Träger (24) von der Fassung entlang dem Rand der Zylinderkopfdichtung (10) so beabstandet ist, daß ein einen Wärmeschild (32) bildendes freies Volumen ausgespart wird.

6. Katalysevorrichtung nach Anspruch 1, dadurch gekennzeichnet, daß der Träger des Katalysators im Fall einer mehrlagigen Zylinderkopfdichtung ohne Fassung ein Fortsatz ist, der durch das Vorstehenlassen eines Abschnitts mindestens einer Lage dieser Dichtung in den Brennraum gebildet wird.

7. Katalysevorrichtung nach Anspruch 6, dadurch gekennzeichnet, daß mindestens eine der Lagen zum Bilden eines Schildes auf der äußeren Oberfläche, auf welcher der Katalysator aufgetragen ist, ausgeformt ist.

8. Katalysevorrichtung nach einem der voranstehenden Ansprüche, dadurch gekennzeichnet, daß sie in unmittelbarer Nähe des Trägers (24) des Katalysators angeordnete Mittel (36) zum Erwärmen umfaßt.

9. Katalysevorrichtung nach einem der voranstehenden Ansprüche, dadurch gekennzeichnet, daß die Mittel (36) zum Erwärmen durch den Träger (24) des Katalysators vom Brennraum (18) isoliert sind.

10. Katalysevorrichtung nach Anspruch 8 oder 9, dadurch gekennzeichnet, daß die Mittel (36) zum Erwärmen einen elektrischen Widerstand (38) umfassen.

11. Katalysevorrichtung nach Anspruch 8, 9 oder 10, dadurch gekennzeichnet, daß der Träger und/oder die Mittel zum Erwärmen auf einem oder mehreren Sektoren S entlang der Kante der Zylinderkopfdichtung angeordnet sind.

## Claims

1. Combustion catalyser device for an internal combustion engine, of the type comprising an engine block (12) and a cylinder head (14), components between which a cylinder head gasket (10) is clamped, including laminated gaskets, with or without crimp, as well as cylinders in each of which there is disposed a movable piston which determines a combustion chamber (18), characterised in that it comprises a catalyst deposited on a peripheral carrier (24) and with limited projection into the combustion chamber, in line with the edge of the cylinder head gasket, said carrier and its catalyst not having any function of agitating the fuel mixture.

2. Combustion catalyser device according to Claim 1, characterised in that the catalyst carrier (24) is the crimp (22) on the cylinder head gasket (10).

3. Combustion catalyser device according to one of Claims 1 or 2, characterised in that the carrier (24) is an element attached to the crimp (22), or integrated into this crimp.

4. Combustion catalyser device according to Claim 3, characterised in that the attached carrier (24) projects into the combustion chamber (18).

5. Combustion catalyser device according to Claim 3 or 4, characterised in that the attached carrier (24) is distant from the crimp in line with the edge of the cylinder head gasket (10) so as to provide a free volume forming a heat shield (32).

6. Combustion catalyser device according to Claim 1, characterised in that, in the case of a laminated cylinder head gasket, with no crimp, the catalyst carrier is an appendage formed by causing part of at least one of the plates of this gasket to project into the combustion chamber.

7. Combustion catalyser device according to Claim 6, characterised in that at least one of the plates is deformed in order to form a shield, on the external face of which the catalyst is deposited.

8. Combustion catalyser device according to any one of the preceding claims, characterised in that it comprises heating means (36) disposed in the immediate vicinity of the catalyst carrier (24).

9. Combustion catalyser device according to any one of the preceding claims, characterised in that the heating means (36) are isolated from the combustion chamber (18) by the catalyst carrier (24).

10. Combustion catalyser device according to Claim 8 or 9, characterised in that the heating means comprise an electrical heating element (38).

11. Combustion catalyser device according to Claim 8, 9 or 10, characterised in that the carrier and/or the heating means are disposed on one or more sectors S on the periphery of the edge of the cylinder head gasket.
